# EUROPEAN PATENT APPLICATION

(11) **EP 1 309 120 A1**
(43) Date of publication of application: **07.05.2003**
(21) Application number: 02253598.3
(22) Date of filing: 22.05.2002
(51) Int. Cl.: H04L 1/00, H04Q 7/38

(54) **A method for allocating wireless communication resources**

(30) Priority: 02.11.2001 US 1296
(71) Applicant: LUCENT TECHNOLOGIES INC., Murray Hill, New Jersey 07974-0636 (US)
(72) Inventor: Subramanian, Vasudevan, Chatham, New Jersey 07928 (US); Yunsong, Yang, Piscataway, New Jersey 08854 (US)
(74) Representative: Buckley, Christopher Simon Thirsk

(57) **Abstract**

A method for allocating the resources of a base station amongst a plurality of wireless units. The method includes transmitting or receiving data, voice or the like over a shared wireless channel by varying a time span and/or bandwidth of the transmission. The time span and/or bandwidth may be varied as a function of a number of considerations, including the channel quality of the wireless unit receiving the downlink transmission.

## Description

### BACKGROUND OF THE INVENTION

### I. FIELD OF THE INVENTION

The present invention relates to communication systems, and more particularly, to wireless communication resources.

### II. DESCRIPTION OF THE RELATED ART

Wireless communications systems include conventional cellular communication systems comprising a number of cell sites or base stations ("BTS"), geographically distributed to support transmission and receipt of communication signals to and from wireless communication devices or units, which may be stationary or fixed. Each base station handles communications over a particular region called a cell. The overall coverage area for the cellular communication system is defined by the union of cells for all of the base stations, where the coverage areas for nearby cell sites overlap to some degree to ensure, where possible, contiguous communications coverage within the outer boundaries of the system's coverage area.

When active, a wireless unit receives signals from at least one base station or cell site over a forward link or downlink and transmits signals to at least one cell site or base station over a reverse link or uplink. There are many different schemes for defining wireless links or channels for a cellular communication system, including, for example, TDMA (time-division multiple access), FDMA (frequency-division multiple access), and CDMA (code-division multiple access) schemes. In CDMA communications, different wireless channels are distinguished by different channelization codes or sequences that are used to encode different information streams, which may then be modulated at one or more different carrier frequencies for simultaneous transmission. A receiver may recover a particular stream from a received signal using the appropriate code or sequence to decode the received signal.

Due to the delay-intolerant nature of voice communication, wireless units in conventional cellular systems transmit and receive over dedicated links between a wireless unit and a base station. Generally, each active wireless unit requires the assignment of a dedicated link on the downlink and a dedicated link on the reverse link. Traditional data applications are typically bursty and, unlike voice communications, relatively delay tolerant. However, as wireless communication systems continue to evolve, support for a variety of real-time data services, such as providing voice over Internet Protocol ("IP") using data packets to carry the voice information is increasing.

In one known CDMA standard, commonly referred to as Universal Mobile Telecommunications System ("UMTS"), wireless units communicate with a base station over dedicated channels. To provide efficient wireless data communications on the forward link, UMTS uses a channel, which can be shared by a plurality of wireless units to receive data. To improve system throughput, the system provides the wireless unit with the best-reported rate access to the shared channel. On the reverse link, UMTS uses a time-multiplexed CPCH- (common packet channel). To date, CPCH has not been completely defined, though proposals have been put forth that enable users to transmit data autonomously. If the wireless unit does not receive an acknowledgment, then the wireless unit re-transmits after a random integer number of time slots have passed.

In one evolution of the third generation CDMA standard (hereinafter referred to as "3G-1x EVDO"), data services are provided using separate frequency carriers. Here, data is transmitted over a time division multiplexed carrier at variable data rates. Specifically, measured signal to interference ratio ("SIR") or carrier to interference ratio ("C/I") at the receiver is used to determine a data rate that may be supported by the receiver. In 3G-1x EVDO, the wireless unit performs the rate calculation using measurements of a pilot signal broadcast from the base station and reports back the rate at which it is to receive data from the base station on a data rate control ("DRC") channel. The DRC channel is spread using a Walsh code assigned to the base station sending the downlink packets to the wireless unit and is only received by that base station. The base station receives the reported rate and sends downlink packets at the reported rate.

Another evolution of the third generation CDMA standard (hereinafter referred to as "3G-1x EVDV") is currently being developed. On the downlink, voice, data and control information - including signaling and protocol information - may be transmitted on the same radio frequency ("RF") carriers using different Walsh codes. On the reverse link, multiple users transmit over the same RF carrier using the designated Walsh code(s) for the supplemental channel ("R-SCH"). Each user transmits over the R-SCH using the user's unique long code to distinguish the user from other users. On the downlink, the 3G-1x EVDV proposes a shared high data rate channel that aggregates bandwidth or code space within the RF carrier to provide data rates of up to three (3) Mbps.

With the demand increasing for wireless data services, base station efficiency in allocating a shared channel on the downlink is becoming an increasing concern in the hereinabove exemplary standards. Presently, resources of the base station are allocated by one of two known techniques. In the first method, the power available to radiate and the bandwidth (e.g., code space) available for allocation to wireless units are varied in response to the data requirements and condition of the wireless units. The interval of time in which a single transmission is completed to each wireless unit, however, is fixed. Alternatively, in a second method, the base station resources ― power and bandwidth ― are fixed at available levels, while the intervals of time allocated to the wireless units on the shared channel are varied in response to the data required to be transmitted and the condition of the wireless units. In the hereinabove techniques, the allocated power or allocated time of the transmission is fixed, irrespective of the condition of the wireless units. Consequently, power, bandwidth and/or time may be wasted in allocating the shared channel amongst a number of needy wireless units, each having differing signal to noise ratios, error rates, data reception rates and attenuation patterns.

### SUMMARY OF THE INVENTION

The present invention provides a method for efficiently allocating the resources of a base station amongst a plurality of wireless units. In accordance with the present invention, information, such as data, voice or the like, or example, may be transmitted and/or received over a shared wireless channel by varying a time span and/or bandwidth of the transmission. For the purposes of the present invention, a time span refers to an interval of time allocated by the base station to downlink a single information payload to a wireless unit. An information payload may be defined as a variable size block of information bits to be communicated by a base station to an active wireless unit at a given time. The entire information destined for the active wireless unit is parsed into a number of information payloads. The time span and/or bandwidth may be varied as a function of a number of considerations, including the channel quality of the wireless unit receiving the downlink. For the purposes of the present invention, channel quality refers to the signal to noise ratio associated with the link between the base station and the wireless unit, taking into consideration any interference from other user's signals and background thermal noise, for example.

In an embodiment of the present invention, a transmission format for each wireless unit is varied in response to the channel quality of that wireless unit. For the purposes of the present invention, transmission format refers to the bandwidth allocated for a particular time in the transmission of information, such as data, voice or the like, to a given wireless unit. Here, each wireless unit receives a signal from the base station regarding the transmission format being employed on the downlink using the shared channel of the base station.

### BRIEF DESCRIPTION OF THE DRAWINGS

The present invention will be better understood from reading the following description of non-limiting embodiments, with reference to the attached drawings, wherein below:
**FIG. 1** depicts a flow chart of a first embodiment of the present invention;
**FIGS. 2(a)** and **2(b)** depict graphical illustrations of the first embodiment;
**FIG. 3** depicts an example of the first embodiment of the present invention;
**FIG. 4** depicts a flow chart of a second embodiment of the present invention;
**FIGS. 5(a)** and **5(b)** depict graphical illustrations of the second embodiment;
**FIG. 6** depicts an example of the second embodiment of the present invention; and
**FIGS. 7(a)** and **7(b)** depict graphical illustrations of alternatives with the respect to the first and second embodiments of the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION

The present invention provides a method for allocating the resources of a base station or the like amongst a number of users, including, for example wireless communications units. In particular, the method of the present invention causes the base station to transmit data, voice or the like over a shared wireless channel by varying the time span and/or bandwidth of the transmission. Likewise, an active wireless unit may receive, over a shared wireless channel of a base station, data, voice or the like having a varied time span and/or bandwidth. To realize the present method, the base station transmits a transmission format allocating the shared channel to each active user, requiring the shared channel to downlink data, voice or the like. The transmission format comprises contiguous or parsed, time duration and/or bandwidth allocated to the downlink data, voice or the like to the particular user requesting the shared channel to downlink data, voice or the like. By employing the present method, the efficiency in utilizing the resources of the base station may be increased.

As is known in the art, a scheduler in the base stations determines the appropriate time for transmission of data, voice or the like to a wireless unit based on feedback pertaining to the channel quality. However, a delay exists from the time the wireless unit measures its channel quality to the time the base station makes a data transmission to the wireless unit based on the channel quality measurement. Due to this time lag, the channel quality at the time of data transmission may be different from the reported channel quality. The magnitude of the difference depends on the rate at which the wireless link between the base station and the mobile changes. This rate of change is in turn dependent on the velocity of the wireless unit relative to the base station. The channel quality report factors into the base station scheduler's decision process in determining when to schedule a transmission to a wireless unit.

Moreover, the format of the transmission is dependent on reported channel quality. If the channel quality at the time of transmission is poorer than the channel quality report used by the scheduler, the transmission format may not be adequate to ensure successful reception by the wireless unit. One mechanism proposed to mitigate this problem is the use of a channel predictor. A channel predictor forecasts the channel quality at the time of transmission so that the transmission may be formatted appropriately. Even with a channel predictor, however, there is always an irreducible error between the predicted and actual channel quality. This error increases with the rate of wireless link variation or the velocity of the wireless unit relative to the base station. By formatting the transmission appropriately, the uncertainty with respect to channel quality may be accounted for.

In one example, a fixed number of bits, ***B,*** are to be sent to a wireless unit during a single transmission. If ***E***_{***r***}**(*B*)** is the energy required by the wireless unit for successful reception of the transmission and the path loss from the base station to the wireless unit is ***PL,*** then the energy that the base station needs to radiate is ***E***_{***r***}**(*B*)**/***PL*,** or ***E***_{***t***}**(*B*).** This energy, ***E***_{***t***}**(*B*),** may be sent at a power, ***P*,** for a duration, ***T*,** where ***P***T***is equal to ***E***_{***t***}**(*B*).** If ***PL*** is known and unchanging, then the base station may use the maximum available power, ***P***_{***max***}**,** to send energy ***E***_{***t***} to the wireless unit over a time, ***T***_{***min***}**,** which may be expressed as ***E***_{***t***}/***P***_{***max***}**.** This approach allows the channel to be freed up for other users, while dedicating the resources of the base station system to a single wireless unit. Allocating any power less than ***P***_{***max***} may require the scheduling of a second wireless unit to fully utilize the shared channel concurrently. This second wireless unit might utilize the shared channel less efficiently as the channel quality of this unit may not merit being scheduled with the highest available priority.

Alternatively, at the time of transmission, the path loss ***PL***_{***t***} to a particular wireless unit may differ from the path loss ***PL*** at the time of scheduling. Here, a transmission by the base station at an energy, ***E***_{***t***}**,** may be expressed as ***E***_{***r***}**/*PL*,** having a power ***P***_{***max***} over a time ***T***_{***min***} may not result in successful reception. It remains unclear whether this particular wireless unit was the most appropriate to have been scheduled at this time. Consequently, the uncertainty in the knowledge of channel quality may result in the scheduling of a wireless unit at time instants that are sub-optimal, and/or the formatting of the transmission in a manner that may not ensure successful reception with a high degree of probability. To ensure that reception by the wireless unit is successful, the time ***T'***_{***min***} should first be determined where this is the minimum duration over which the transmission is made in order to ensure the average path loss ***PL***_{***avg***} is likely to exceed the predicted path loss ***PL*** at the time of scheduling. Correspondingly, the power **P'** should then determined from ***E'***_{***t***}**/*T'***_{***min***}**,** where ***E'***_{***t***} is equal to ***E***_{***r***}**/*PL***_{***avg***}**.** Alternatively, if the entire power **P** continues to be allocated to a scheduled wireless unit, the fraction of the time span during a downlink transmission, also referred to as the duty cycle of the transmission, is determined as a ratio of ***T***_{***min***}**/*T'***_{***min***}**.** Therefore, formatting a scheduled transmission should take into the rate of variation of the wireless unit's channel quality into account. Moreover, each scheduled transmission should be capable of being formatted in code, power and time domains.

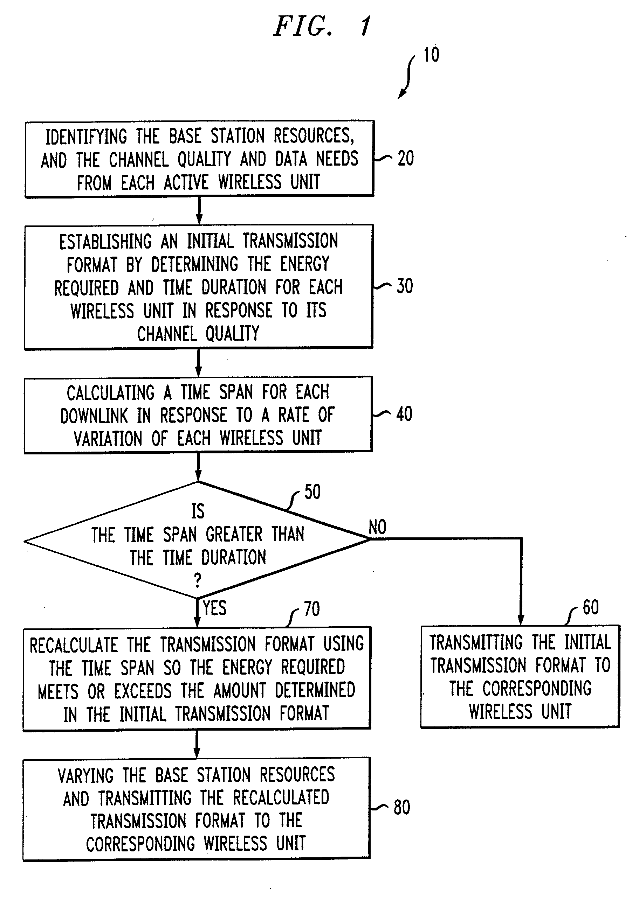

Referring to **FIG. 1**, a flow chart depicting a first embodiment of the present invention is illustrated. Here, a method **(10)** is shown for communicating over an air interface. More particularly, method **(10)** provides one approach for allocating a base station's resources amongst a plurality of wireless units. The base station's resources, here, refer to the power and bandwidth available to be allocated to the plurality of wireless units using the shared wireless channel.

The method **(10)** enables the format of a transmission to be determined using, for example, channel quality, rate of channel variation, as well as the size of the information payload to be sent to the wireless unit. This method **(10)** may allocate all or most of the bandwidth and power to a single wireless unit for an interval of time depending on the rate of channel variation. The rate of channel variation may dictate partial allocation of bandwidth and power, as well as a longer allocation of time.

The method **(10)** initially identifies the base station's resources **(20)**. While identifying the base station's resources, the channel quality and data needs of each active wireless unit are determined. Reporting the signal to noise ratio and downlink needs of each active wireless unit to the base station may be realized by various known techniques, including the IS 856 standard, for example

Once the base station's resources have been identified and the channel quality and data needs of each active wireless unit have been determined, an initial transmission format is established **(30)**. This initial transmission format for each active wireless unit may be established, one wireless unit at a time using an iterative approach to method **(10)**, by determining the energy required and the time duration necessary to complete the downlink transmission for each active wireless unit. In an alternative approach, the initial transmission format, much like the remainder of method **(10)** as performed within the base station, may be established for all or most of the active wireless units simultaneously. For the purposes of the present invention, time duration is defined as the information payload divided by the data rate. Here, information payload refers to a variable block of information bits to be transmitted by the base station to the particular wireless unit as part of a downlink, while data rate refers to the rate in which data may be transmitted over the air interface to the particular wireless unit by the base station using the shared channel. The energy required and the time duration necessary to complete the downlink transmission are determined in response to the channel quality of the particular wireless unit, made available as a result of the identifying step **(20)**. By establishing an initial transmission format for one or more active wireless units, the resources of the shared channel may be initially allocated amongst the active wireless units.

Thereafter, a time span for each wireless unit **(40)** is calculated. As detailed hereinabove, time span refers to an interval of time allocated by the base station to downlink the information payload to a wireless unit. Each time span, however, is calculated as a function of the rate of variation of each wireless unit. For the purposes of the present invention, the rate of variation of each wireless unit refers to the frequency in which the channel quality of the wireless link between the base station and the wireless unit(s) may vary.

Once the time span is calculated, method **(10)** performs a comparison step (50). More particularly, the calculated time span of each wireless unit is compared with the time duration of that wireless unit. If the calculated time span is not greater than the time duration of the particular wireless unit, then the initial transmission format is final and deemed acceptable **(60)**. Thereafter, this final transmission format is transmitted by the base station to be received by the particular wireless unit.

If, in the alternative, the calculated time span is greater than the time duration of the particular wireless unit, then a series of steps are executed. Firstly, the initial transmission format is recalculated using the calculated time span such that the energy required meets or exceeds the amount determined in the initial transmission format **(70)**. In response to this recalculation step, the base station resources are correspondingly fractionally varied. As such, the time span, power and/or bandwidth of the shared channel of the base station associated may be altered. Thereafter, the recalculated transmission format is finalized and transmitted by the base station to be received by the particular wireless unit **(80)**.

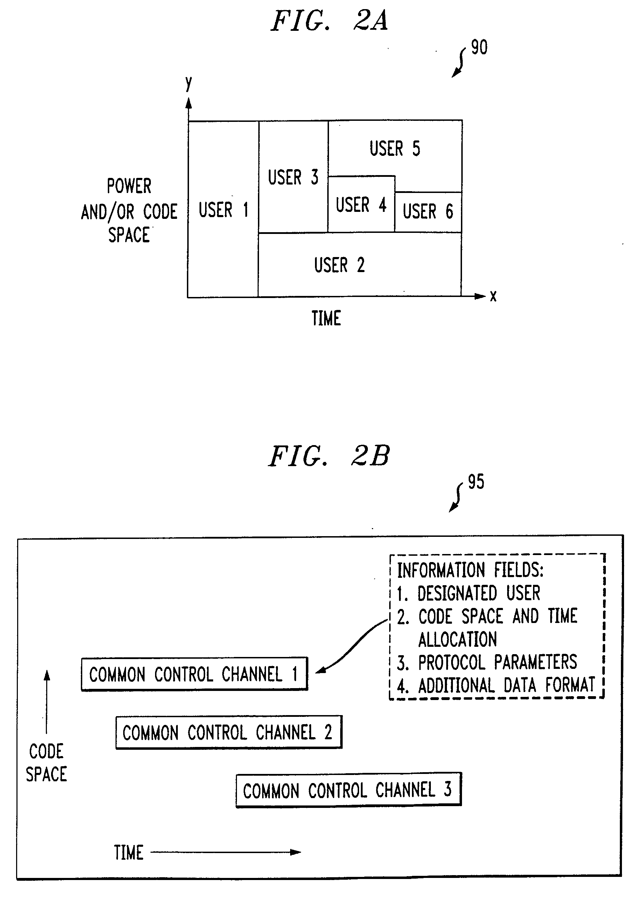

Referring to FIG. 2(a), a graphical illustration **90** of the management of the resources of a base station in accordance with the first embodiment of the present invention is shown. Graphical illustration **90** illustrates the division of time and power resources between wireless units using the method **(10** or **100)** for allocating a base station's resources. The ***x-*** axis in graphical illustration **90** represents time, while the ***y-*** axis represents power and/or code space. Here, the base station's resources are allocated according to the scheduled wireless unit(s) along the ***x-*** and ***y*-** axes. The allocation of time, power and/or code space may be quantized using fixed increments.

Referring to **FIG. 2(b)**, a second graphical illustration **95** in accordance with the first embodiment of the present invention is shown. Here, a control mechanism is depicted that enables flexibility in the allocation of the system resources to a scheduled wireless unit. As shown, the control mechanism consists of a set of shared/common channels. The information fields in each control channel designate a scheduled user, as well as the portion of the time and power allocated to that particular wireless unit. The method of this embodiment requires information fields to be carried on the associated control channels, identifying the subset of resources (bandwidth and time) assigned to the scheduled wireless unit. The information fields required for this purpose are described in the context of a system where at most two wireless units may be scheduled concurrently.

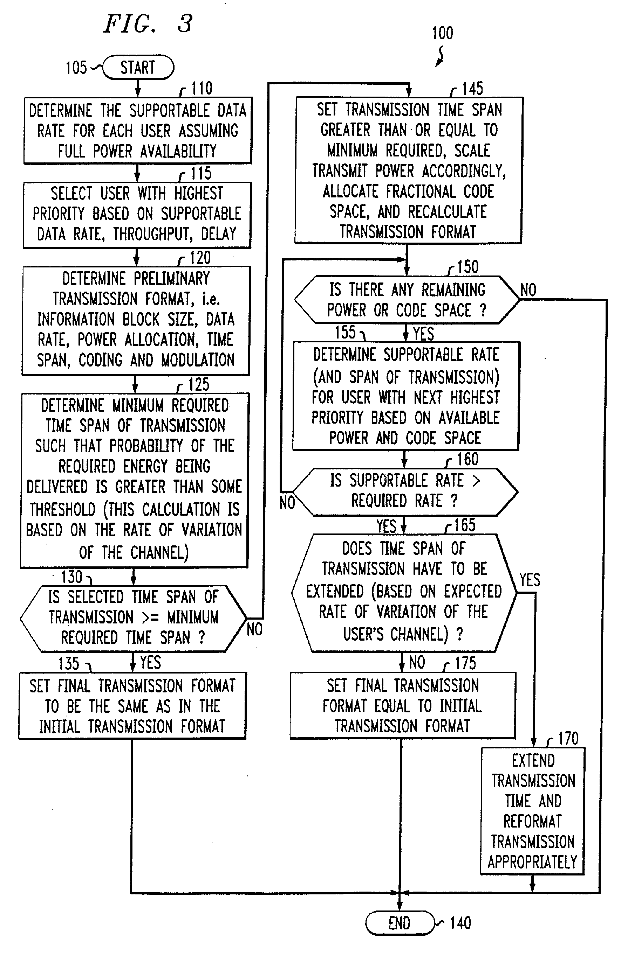

Referring to **FIG. 3**, an example of a method **(100)** for allocating a base station's resources amongst a plurality of wireless units of the first embodiment is shown. Once started **(105)**, the method **(100)** initially determines the supportable data rate for each wireless unit **(110)**. This step may assume that full power is available at the base station. A wireless unit is then selected with the highest priority, based on a number of characteristics derived from the wireless unit's channel quality, including, for example, supportable data rate, throughput and delay **(115)**. The step in selecting the wireless unit with the highest priority may be realized using a C/I predictor to estimate the channel quality at the time of transmission. This predicted value may be used to determine the relative priority of the users as well as the data rates that each may support. The buffer status of data to be sent, channel quality, and rate of channel variation may be factored into determining the supportable rate. In addition, user throughput, and time elapsed since the last serving time, may be factored in when deciding the priority of a user.

Thereafter, a preliminary or initial transmission format is determined **(120)**. This initial transmission format comprises information block size, time span, coding and modulation details, for example. The minimum required time span of transmission is then calculated **(125)**. This calculation is functionally dependent on the rate of variation of the wireless unit's channel quality. In so doing, the determined time span provides the probability that the required energy being delivered is greater than a threshold value.

With the initial transmission format is determined **(120)**, the calculated time span of the transmission is compared with the time duration **(130)**. Time duration, as defined hereinabove, may also be referred to instantly as the minimum required time span. In the event the calculated time span is greater than or equal to the time duration, the transmission format is finalized **(135)** and the process is completed **(140)**. Alternatively, if the calculated time span is less than the time duration, the transmission time span is set to be greater than or equal to the time duration, the transmit power is scaled accordingly, the bandwidth fractionally allocated, and the transmission format is recalculated **(145)**.

If the power and bandwidth remain after a first wireless unit is scheduled, the feasibility of scheduling a second user is evaluated. If it is possible to schedule a second wireless unit, this transmission is formatted accordingly, subject to the constraints imposed by the resource allocation to the first wireless unit. More particularly, the remaining power and bandwidth of the shared channel is subsequently determined **(150)**, and the supportable rate and span of transmission, for the wireless unit with the next highest priority based on available power and bandwidth is calculated **(155)**. Thereafter, supportable rate is compared with the required **(160)**. If the supportable rate is not greater than the required rate, the supportable rate and span of transmission, for wireless unit with the very next highest priority based on available power and bandwidth is then calculated **(155)**.

If the supportable rate is greater than the required rate, the time span of the transmission is examined based on the expected rate of variation of the particular wireless unit **(165)**. If the time span needs to be extended, the transmission format is recalculated accordingly **(170)** and the process is completed **(140)**. However, if the time span need not be extended, the initial transmission format is finalized **(175)** and the process is completed **(140)**.

The method **(100)** may be extended to enable more than two wireless units to be scheduled at each scheduling instant. Numerous variations of this method will be apparent to skilled artisans upon reviewing the instant disclosure, including, for example, the following scenarios: (i) where the second wireless unit that is scheduled may not have its transmission format altered based on the rate of channel variation; (ii) where the second wireless unit may be limited to a choice of transmission formats that span at most the duration of the first wireless unit's transmission; (iii) where the allocations of energy to the second wireless unit may be made in minimum increments of one slot (or power control group) and all available bandwidth.

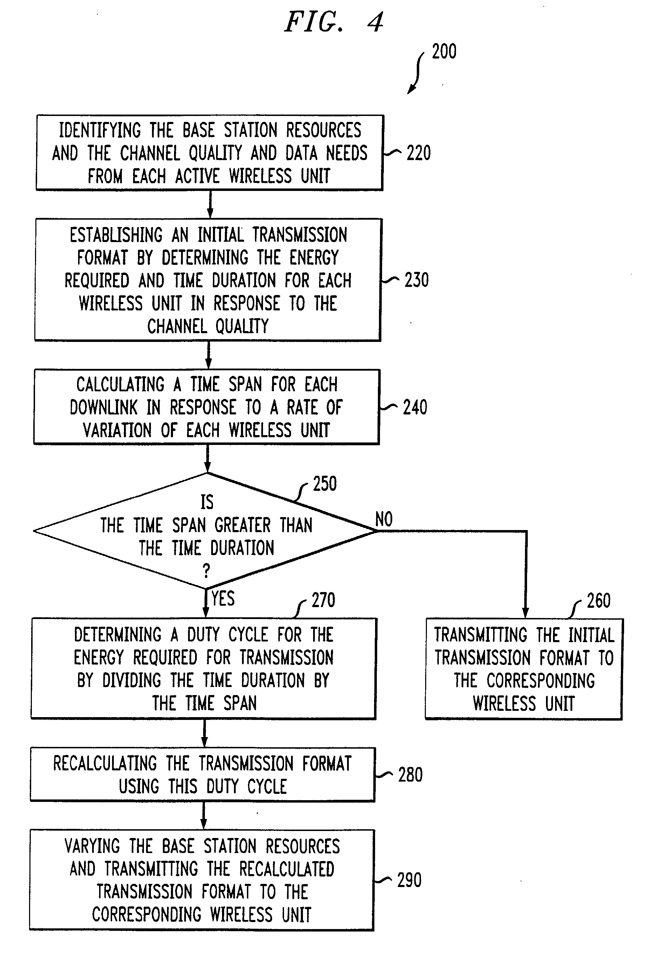

Referring to **FIG. 4**, a flow chart depicting a second embodiment of the present invention is illustrated. Here, a method **(200)** is shown for communicating over an air interface. More particularly, method **(200)** provides another approach for allocating a base station's resources amongst a plurality of wireless units. The base station's resources, here, refer to the power and bandwidth available to be allocated to the plurality of wireless units using the shared wireless channel.

The method **(200)** enables the format of a transmission to be determined using, for example, channel quality, rate of channel variation, as well as the size of the downlink to be sent to the wireless unit. This method **(200)** allocates bandwidth and power to a single wireless unit for a single interval of time, except when the rate of channel variation dictates an on-off allocation of bandwidth and power, accompanied by an allocation of multiple time intervals for the particular transmission.

The method **(200)** initially identifies the base station's resources **(220)**. While identifying the base station's resources, the channel quality and data needs of each active wireless unit are determined. Reporting the signal to noise ratio and downlink needs of each active wireless unit to the base station may be realized by various known techniques, including the IS 856 standard, for example

Once the base station's resources have been identified and the channel quality and data needs of each active wireless unit have been determined, an initial transmission format is established **(230)**. This initial transmission format for each active wireless unit may be established, one wireless unit at a time using an iterative approach to method **(200)**, by determining the energy required and the time duration necessary to complete the downlink transmission for each active wireless unit. In an alternative approach, the initial transmission format, much like the remainder of method **(200)** as performed within the base station, may be established for all or most of the active wireless units simultaneously. As defined hereinabove, time duration is defined as the information payload divided by the data rate. Information payload refers to a variable block of information bits to be transmitted by the base station to the particular wireless unit as part of a downlink, while data rate refers to the rate in which data may be transmitted over the air interface to the particular wireless unit by the base station using the shared channel. The energy required and the time duration necessary to complete the downlink transmission are determined in response to the channel quality of the particular wireless unit, made available as a result of the identifying step **(220)**. By establishing an initial transmission format for one or more active wireless units, the resources of the shared channel may be initially allocated amongst the active wireless units.

Thereafter, a time span for each wireless unit **(240)** is calculated. As detailed hereinabove, time span refers to an interval of time allocated by the base station to downlink the entire data to a wireless unit. Each time span, however, is calculated as a function of the rate of variation of each wireless unit. For the purposes of the present invention, the rate of variation of each wireless unit refers to the frequency in which the channel quality of the wireless link between the base station and the wireless unit(s) may vary.

Once the time span is calculated, method **(200)** performs a comparison step **(250)**. More particularly, the calculated time span of each wireless unit is compared with the time duration of that wireless unit. If the calculated time span is not greater than the time duration of the particular wireless unit, then the initial transmission format is final and deemed acceptable **(260)**. Thereafter, this final transmission format is transmitted by the base station to be received by the particular wireless unit.

If, in the alternative, the calculated time span is greater than the time duration of the particular wireless unit, then a series of steps are executed. Firstly, a duty cycle is determined for the energy required for the downlink transmission **(270)**. For the purposes of the present invention, a duty cycle is a fraction of the calculated time span in which a downlink transmission may be executed. As such, the duty cycle is calculated by dividing the previously determined time duration by the previously calculated time span. Thereafter, the initial transmission format is recalculated using the calculated duty cycle **(280)**. In response to this recalculation step, the base station resources are correspondingly fractionally varied. As such, the time span, power and/or bandwidth of the shared channel of the base station associated may be altered. Thereafter, the recalculated transmission format is finalized and transmitted by the base station to be received by the particular wireless unit (**290**).

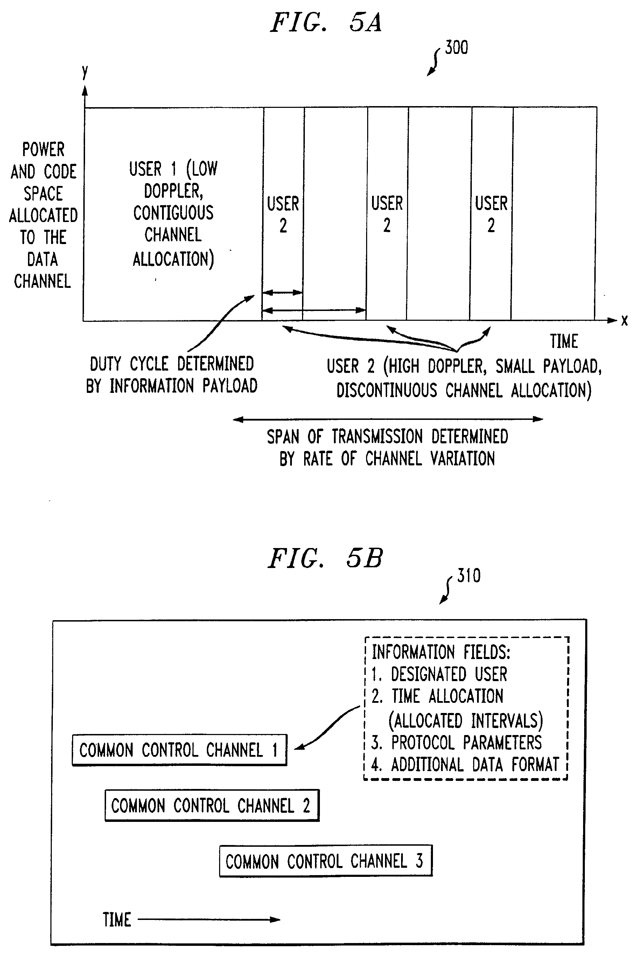

Referring to **FIG. 5(a)**, a graphical illustration **300** of the management of the resources of a base station in accordance with the second embodiment of the present invention is shown. Graphical illustration **300** illustrates the division of time resources between wireless units with an on-off allocation of power using the method **(200** or **400)**. The ***x-*** axis in graphical illustration **300** represents time, while the ***y-*** axis represents power and code space allocated to shared channel. Here, the base station's resources are allocated according to the scheduled wireless unit(s) along the ***x-*** and ***y-*** axes. The allocation of time, power and/or code space may be quantized using fixed increments.

As shown, a first and a second wireless unit (e.g., user) are allocated time resources. A duty cycle may be determined by the information payload of each wireless unit. Each wireless unit is allocated a fraction of the time resources of the base station as function of the channel quality. For example, the first wireless unit has a relatively low Doppler measurement, and consequently a contiguous channel allocation. In contrast, the second wireless unit is allocated a time interval **320** based on a relatively high Doppler measurement, and as a result, a discontinuous channel allocation.

Referring to **FIG. 5(b)**, a second graphical illustration **310** in accordance with the second embodiment of the present invention is shown. Here, a control mechanism is depicted that enables flexibility in the allocation of the system resources to a scheduled wireless unit. As shown, the control mechanism consists of a set of shared/common channels. The information fields in each control channel designate a scheduled user, as well as the potentially multiple intervals of time allocated to that wireless unit for a particular transmission. The method of this invention requires information fields to be carried on the associated control channels, identifying the subset of resources (time intervals) assigned to the scheduled wireless unit for the particular transmission. As illustrated, the time intervals allocated may be indicated to each wireless unit occupying the channel.

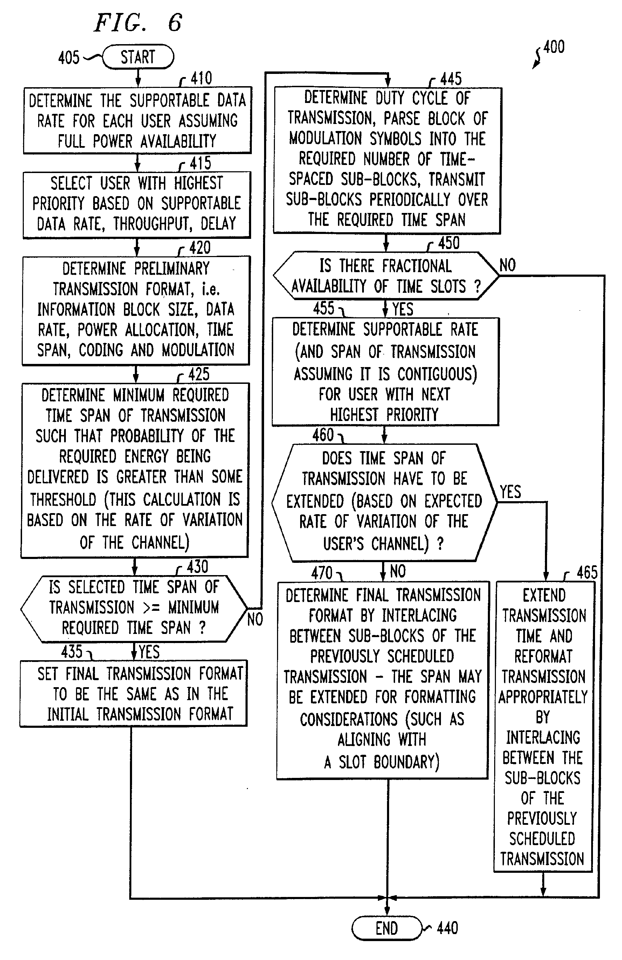

Referring to **FIG. 6**, an example of a method **(400)** for allocating a base station's resources amongst a plurality of wireless units of the second embodiment is shown. Once started **(405)**, the method **(400)** initially determines the supportable data rate for each wireless unit **(410)**. This step may assume that full power is available at the base station. A wireless unit is then selected with the highest priority, based on a number of characteristics derived from the wireless unit's channel quality, including, for example, supportable data rate, throughput and delay **(415)**. The step in selecting the wireless unit with the highest priority may be realized using a C/I predictor to estimate the channel quality at the time of transmission. This predicted value may be used to determine the relative priority of the users as well as the data rates that each may support. The buffer status of data to be sent, channel quality, and rate of channel variation may be factored into determining the supportable rate. In addition, user throughput, and time elapsed since the last serving time, may be factored in when deciding the priority of a user.

Thereafter, a preliminary or initial transmission format is determined **(420)**. This initial transmission format comprises information block size, time span, coding and modulation details, for example. The minimum required time span of transmission is then calculated **(425)**. This calculation is functionally dependent on the rate of variation of the wireless unit's channel quality. In so doing, the determined time span provides the probability that the required energy being delivered is greater than a threshold value.

With the initial transmission format is determined **(420)**, the calculated time span of the transmission is compared with the time duration **(430)**. Time duration, as defined hereinabove, may also be referred to instantly as the minimum required time span. In the event the calculated time span is greater than or equal to the time duration, the transmission format is finalized **(435)** and the process is completed **(440)**. Alternatively, if the calculated time span is less than the time duration, the transmission time span is set to be greater than or equal to the time duration, a duty cycle of the transmission is determined, parsing the block of modulation symbols into a required number of time-spaced sub-blocks of information, which are transmitted periodically over the required time span **(445)**.

If a first wireless unit's transmission has been parsed into disjointed blocks over time, a second wireless unit needs to be scheduled for transmission at the end of the first sub-block. Consequently, the number of partially available time slots - e.g., the fractional component of the time span of a downlink transmission - and their fractional availability is subsequently determined **(450)**. The supportable rate and span of transmission, for the wireless unit with the next highest priority is then calculated **(455)**, assuming the span of transmission to be contiguous.

Thereafter, the time span of the transmission is examined based on the expected rate of variation of the particular wireless unit **(460)**. If the time span needs to be extended, the transmission format is recalculated **(465)** and the transmission time expanded by interlacing between the sub-blocks of the previously scheduled transmission **(465)** and the process is completed **(440)**. However, if the time span need not be extended, the final transmission format is determined by interlacing between sub-blocks of the previously scheduled transmission, thereby enabling the span to be extended for formatting considerations, such as, for example alignment with a slot boundary **(470)**. Thereafter, the process is complete **(440)**.

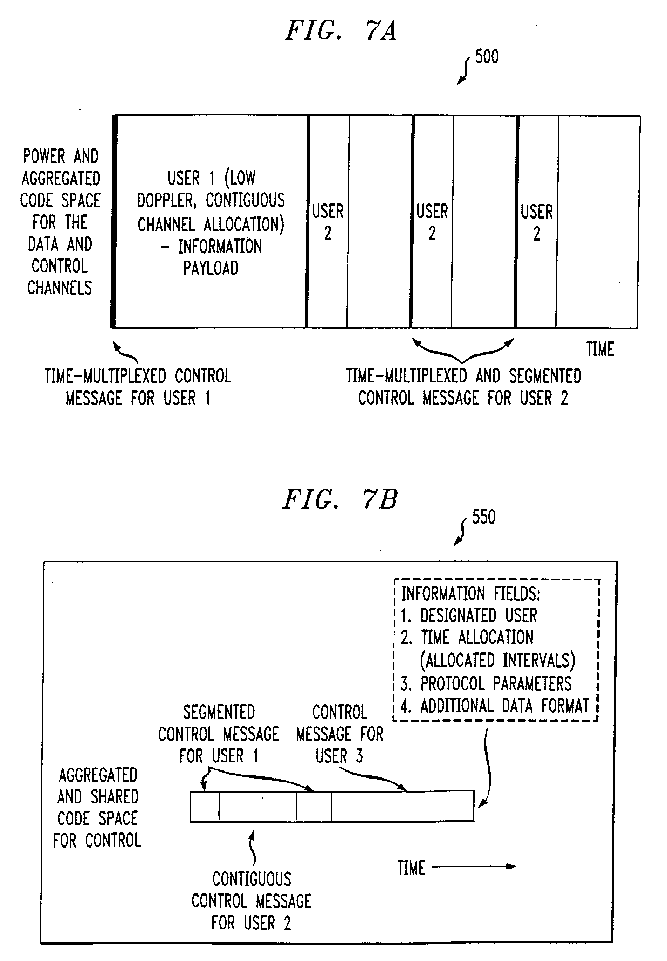

Referring to **FIGS. 7(a)** and **7(b)**, a third and a fourth graphical illustration **500** and **550** in accordance with alternatives to the control aspect of the embodiments of the present invention is shown. With respect to **FIG. 7(a)**, the control messages to the wireless unit(s) that have been allocated resources on the high data rate channel are time-multiplexed and interlaced on a single shared control channel. This shared control channel has a separate allocation of code space from the shared data channel. With respect to **FIG. 7(b)**, the control mechanism applies to a system, such as IS-856, for example, where the code space for both packet data and control channels is aggregated. Here, the control messages precede the accompanying data transmissions in time such that the control signaling provides a single control message parsed into multiple blocks, depending on the rate of variation of the channel to span a longer interval of time. It should be noted that the data may also be parsed and follows each control segment.

It should be apparent to skilled artisans, upon reviewing the instant disclosure, that various alternatives of formatting and scheduling wireless units may be realized in accordance with the present invention. For example, each of the wireless units may be prioritized using a scheduler, the initial transmission format may be determined, reformat the highest priority wireless unit to the final transmission format, and if necessary, return to the wireless unit with next highest priority if and when the resources are available. Alternatively, a set of the wireless units to be scheduled may be selected at a given time, wherein at least a subset if not all of the set have their corresponding final transmission formats determined at about the same time.

Moreover, it should be noted that any of the hereinabove detailed methods may be applied to formatting a control channel(s) in addition to formatting a packet data (or high data rate) channel. The control channel(s) communicates the format of the accompanying packet data channel transmission to an active wireless unit. The information payload on the control channel may take on a format related to that of the packet data channel transmission.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the spirit and scope of the present invention It is therefore contemplated that the appended claims will cover any such modifications or embodiments as fall within the true scope of the invention.

## Claims

1. A method of communicating over an air interface comprising:
transmitting information over a shared wireless channel by varying at least one of a time span and a bandwidth.

2. The method of Claim 1, wherein the at least one of time span and bandwidth is varied as a function of a channel quality of a wireless receiver.

3. The method of Claim 1, further comprising the step of transmitting a signal corresponding with a transmission format to be employed in the information to be transmitted.

4. The method of Claim 3, wherein the transmitting a signal comprises:
determining the transmission format; and
recalculating the transmission format if the time span is greater than an information payload to be transmitted divided by a data rate of the wireless receiver.

5. The method of Claim 3, wherein the transmitting a signal comprises:
determining the transmission format; and
recalculating the transmission format using a duty cycle if the time span is greater than an information payload to be transmitted divided by a data rate of the wireless receiver.

6. A method of communicating over an air interface comprising:
receiving information over a shared wireless channel by varying at least one of a time span and a bandwidth.

7. The method of Claim 6, wherein the at least one of time span and bandwidth is varied as a function of a channel quality of a wireless receiver.

8. The method of Claim 6, further comprising the step of receiving a signal corresponding with a transmission format to be employed in the information to be transmitted.

9. The method of Claim 8, wherein the receiving a signal comprises:
determining the transmission format; and
recalculating the transmission format if the time span is greater than an information payload to be transmitted divided by a data rate of the wireless receiver.

10. The method of Claim 8, wherein the receiving a signal comprises:
determining the transmission format; and
recalculating the transmission format using a duty cycle if the time span is greater than an information payload to be transmitted divided by a data rate of the wireless receiver.
